# EUROPEAN PATENT APPLICATION

(11) **EP 4 629 000 A1**
(43) Date of publication of application: **08.10.2025**
(21) Application number: 25168687.9
(22) Date of filing: 04.04.2025
(51) Int. Cl.: G05B 13/02, G05B 19/418

(54) **ADAPTIVE TOLERANCING AND MACHINING PARAMETERS FOR SUBSEQUENT MACHINING**

(30) Priority: 04.04.2024 US 202418626517
(71) Applicant: RTX Corporation, Farmington, CT 06032 (US)
(72) Inventor: GUO, Changsheng, Farmington, 06032 (US); GWARA, Michael Stanley, Farmington, 06032 (US); RANGANATH, Santosh K., Farmington, 06032 (US)
(74) Representative: Dehns

(57) **Abstract**

A method of performing machining steps includes the steps of 1) performing (100) an initial machining on a plurality of initial parts utilizing at least one machine and storing machining parameters for each of the initial parts, 2) capturing (102) features of the initial parts subsequent to the initial machining, 3) associating (104) the captured features of the initial parts and the stored machining parameters for each of the initial parts, and utilizing (106) the association to form a training database, 4) predicting (108) a part quality for production parts by utilizing a machining parameter of a production machining operation and 5) modifying (110) machining parameters of a subsequent machining production step based upon the predicted part quality. A system is also disclosed.

## Description

### BACKGROUND

This application relates to an adaptive method and system which modifies tolerances, nominal dimensions and/or machining parameters for downstream machining operations.

Most modern manufacturing processes have tolerances that a manufactured part must come within for the part to be acceptable. Many manufactured parts have a tolerance stack up, such that a particular manufacturing detail might need to meet plural tolerances. A particular part might have areas that must meet a plurality of tolerance ranges.

In addition, machining parameters are typically controlled to achieve desired part qualities, such as surface finish, as an example.

### SUMMARY

It should be understood that any or all of the features or embodiments described herein can be used or combined in any combination with each and every other feature or embodiment described herein unless expressly noted otherwise.

According to a first aspect, there is provided a method of performing machining steps includes the steps of 1) performing an initial machining on a plurality of initial parts utilizing at least one machine and storing machining parameters for each of the initial parts, 2) capturing features of the initial parts subsequent to the initial machining, 3) associating the captured features of the initial parts and the stored machining parameters for each of the initial parts, and utilizing the association to form a training database, 4) predicting a part quality for production parts by utilizing a machining parameter of a production machining operation and 5) modifying machining parameters of a subsequent machining production step based upon the predicted part quality.

Optionally, the captured features include a dimension of at least one feature of the respective initial part, and the modification of the subsequent machining step includes changing a tolerance for a production feature formed by the subsequent production machining step.

Optionally, the subsequent machining step has also been put through steps 1-4 such that the changed tolerance can be utilized to control parameters of a second subsequent machining step.

Optionally, the tolerance is tightened during the subsequent machining step based upon the predicted part quality from the production machining operation.

Optionally, the tolerance is loosened during the subsequent machining step based upon the predicted part quality from the production machining operation.

Optionally, the subsequent machining step has a speed modified based upon the predicted part quality.

Optionally, a backlash during the subsequent machining step is monitored to control the speed based upon predicted part quality.

Optionally, a feed rate of the initial parts into the subsequent machining step is controlled based upon the prediction of the part quality.

Optionally, the production machining operation and the subsequent machining step are performed on different ones of said at least one machine.

According to a second aspect, there is provided a system includes at least one machine and a control for the machine. The control includes processing circuitry and a memory, the memory including training data. The training data is prepared by performing an initial machining step on a plurality of initial parts utilizing the at least one machine and storing machining parameters for each of the initial parts, capturing features of the initial parts subsequent to the initial machining step, associating the captured features of the initial parts with the stored machining parameters for each of the initial parts, and utilizing the association to form the training data. The processing circuity is operable to predict a part quality for production parts by utilizing a machining parameter of a production machining operation based upon the training data. The processing circuity is operable to modify machining parameters of a subsequent production machining step based upon the predicted part quality.

Optionally, the captured features include a dimension of at least one feature, and the modification of the subsequent machining step includes changing a tolerance for a feature formed by the subsequent machining step.

Optionally, the processing circuity is operable to associate training data with the subsequent machining step such that the changed tolerance can be utilized to control parameters of a second subsequent machining step.

Optionally, the processing circuity is operable to associate training data with the subsequent machining step such that the modified tolerance may be utilized to find a part that might have been out of tolerance to be acceptable.

Optionally, the processing circuity is operable to tighten the tolerance during the subsequent production machining step based upon the predicted part quality from the production machining operation.

Optionally, the processing circuity is operable to loosen the tolerance during the subsequent production machining step based upon the predicted part quality from the production machining operation.

Optionally, the processing circuity is operable to modify a speed of the subsequent machining step based upon the predicted part quality.

Optionally, the processing circuity is operable to monitor a backlash during the subsequent machining step to control the speed based upon predicted part quality.

Optionally, the processing circuity is operable to control a feed rate of a part production into the subsequent production machining step based the prediction of the part quality.

Optionally, the production machining operation and the subsequent production machining step are performed on different ones of said at least one machine.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Certain exemplary embodiments will now be described in greater detail by way of example only and with reference to the accompanying drawings, in which:
Figure 1A schematically shows a simple machining operation;
Figure 1B shows an example part that might be manufactured by the Figure 1A system;
Figure 2 shows a more complex machining system;
Figure 3A shows a simple part that may be manufactured by a machining operation;
Figure 3B is an end view of the Figure 3A part;
Figure 3C shows a first scenario for the specifications that a part can be manufactured to based on information learnt from the previous steps;
Figure 3D shows a second scenario for the specifications that a part can be manufactured to based on information learnt from the previous steps; and
Figure 4 is a flow chart for a method according to this disclosure.

### DETAILED DESCRIPTION

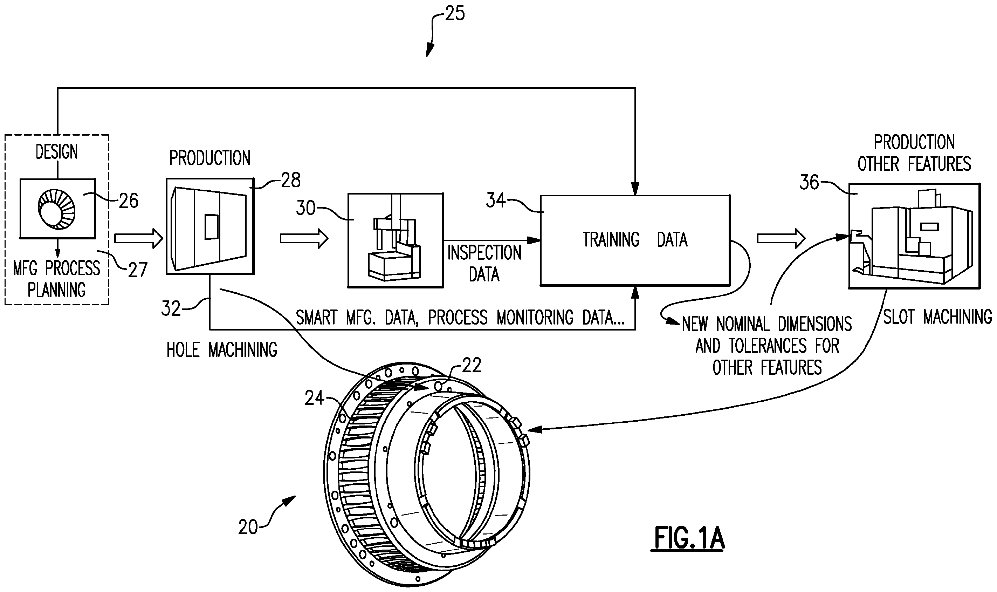

A part 20 is shown in Figure 1A having a locating hole 22 and a plurality of slots 24. As is known, the slots 24 must meet a plurality of dimension tolerances, as must the hole 22.

It is sometimes difficult to meet the plurality of dimensions within tolerances, such that an acceptable part is manufactured.

This disclosure goes to a method and control for changing nominal dimensions, tolerances and/or machining parameters for downstream manufacturing steps based upon the result of earlier manufacturing steps.

A design 26 is stored, such as on a control 27 for a system 25 that is manufacturing a part such as part 20. As shown, the control 27 communicates with a first machining operation 28. The first machining operation 28 performs a manufacturing step on an intermediate product that is to become part 20. In initial runs, the component formed by the first manufacturing step 28 is measured at step 30. According to this disclosure, the measurement might be of dimensions and/or features such as surface finish, as an example. Other features can include shapes and position parameters such as cylindricity, concentricity, flatness, waviness etc.

These measurements (from paragraph 18) are associated with machining parameters from the first machining step at 28 that formed the particular part. As an example, the speed of cutting, whether or not there might have been backlash, the depth of cuts or other manufacturing parameters can be associated with the measured dimensions and/or features.

Say, a speed of X at the first step 28 might be associated with a measured dimension Y for a formed feature. Once a plurality of parts have been measured at step 30, and associated with their manufacturing parameters, a training data set can be provided at 34. Element 34 may be part of control 27. After the formation of training data 34, the production step 28 can communicate its manufacturing parameters through path 32 directly to control 27. The control 27 may then use the training data at 34 to associate a particular machining parameter with the expected resultant dimensions and/or features. This can then be communicated to a subsequent machining step 36. The expected dimension and/or feature of the earlier step 28 can then be utilized to modify acceptable tolerances and/or features at the subsequent machining step 36. An example will be provided below.

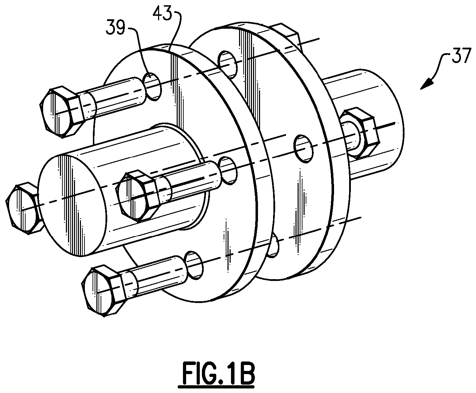

Figure 1B shows another part 37. As can be appreciated, the part 37 has a number of tolerances associated with a number of dimensions. As one example, a hole 39 is formed in a disk 43. The hole may need to be formed with a minimum amount of material between a top of hole 39 and a top of disk 43. There will be tolerances ranges for a diameter, a location for hole 39, as well as a size for disk 43. These ranges "stack-up" and are all related to achieving the minimum mentioned here.

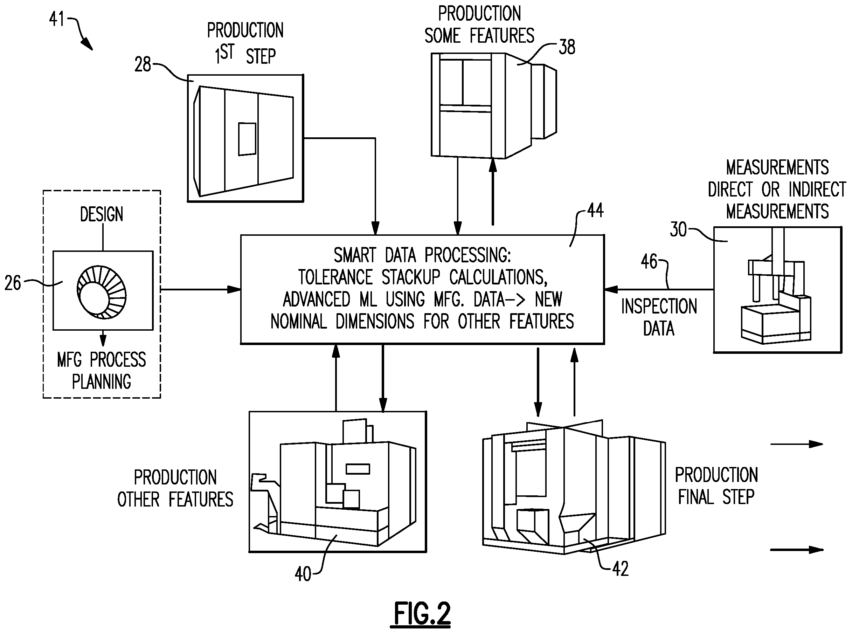

Figure 2 shows a system 41 which is more complex than system 25 as shown in Figure 1A. Here design 26 communicates to the control 44 that has received the training data for the step 28. The training data is utilized as set forth above to predict the result of a particular machining step at the first machining step 28. Subsequent machining at 38 is then modified based upon the expected result from the first step 28. Note, that the machining step 38 has undergone a process similar to that shown in Figure 1A for the step 28. Thus, the control 44 can predict the dimensions and/or features after machining step 38 similar to step 28.

Subsequent machining steps 40 and 42 operate in the same manner.

Measurements are taken at 30, which may be performed at any or all of the steps 28/38/40/42. Measurements can be performed at an inspection station such as 30, but they can also be performed on the machine 28 itself. The measurement here refers to dimensions (geometry). Other measurements (or monitoring data) are obtained while the part is being machined. This may be utilized at 46 to further train the training data sets in control 44. This could be an open or closed process. That is, once the training data sets in control 44 are complete they may be static, or they could be continuously updated by subsequent measurements at 46.

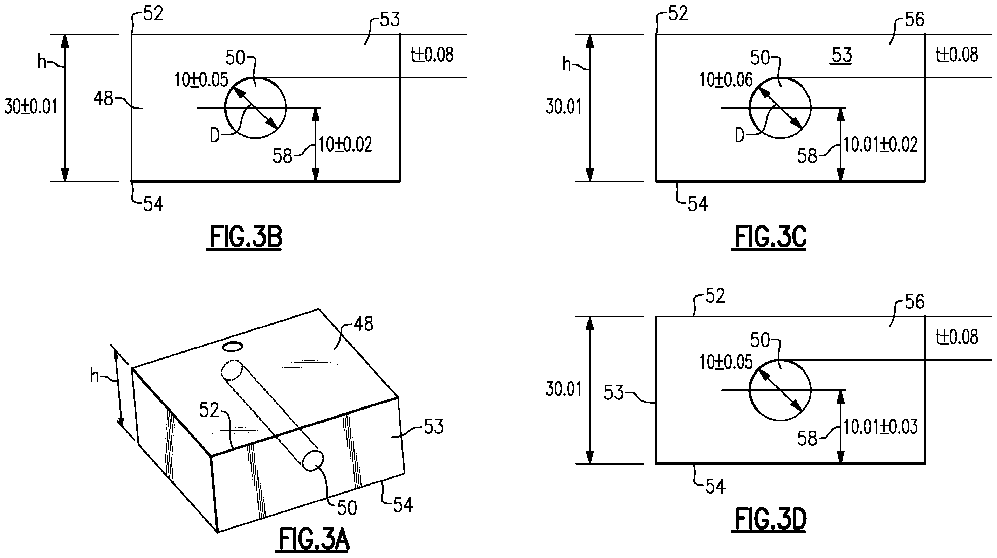

One simplified example of how the method of this disclosure could be utilized to modify tolerances is shown in Figures 3A-3D. As shown in Figure 3A, a part 48, as shown, has a distance h on the end wall 53 between the top 52 and bottom 54

As shown in Figure 3B, the height is desirably 30 +/- 0.01. The hole 50 has a desired diameter D of 10 +/- 0.05. A dimension 58 from the bottom 54 to a center of the hole 50 is desirably 10 +/- 0.02. A distance between a top of the hole 50 and the top 52 of the end wall 53 is desirably kept within a tolerance of +/- 0.08.

Now, Figure 3C shows a first formed part 56. Part 56 has a distance h between the top 52 and the bottom 54 of the end face 53. The measured distance h has been predicted to be 30.01 based upon machining parameters received from the manufacturing machine. Subsequent machining will occur to form the hole 50. Since the distance h is at the top end of the tolerance range the control may modify the tolerance for dimensions 58 and/or the diameter D.

Two possible scenarios are shown. Since the distance h is at the high end of the tolerance range, now a tolerance of 10 +/- 0.06 may be used for the diameter D, with the distance 58 remaining at 10.01 +/- 0.02. That is, the tolerance for the diameter D may be relaxed.

When forming the hole 50 the control may move the machining parameters to be more aggressive based upon this relaxed tolerance. Alternatively, this will allow additional parts to be found acceptable that might not have been found acceptable in the past. The control will associate machining parameters as the hole 50 is being formed with a predicted size for the diameter D.

Figure 3D shows an alternative wherein the tolerance for the dimension 58 is relaxed in a similar manner.

It should be understood that if the distance h is predicted to be on the low end of the tolerance range, say 29.99, then the tolerance on one of diameter D or distance 58 can be adjusted accordingly in a similar manner.

This shows the power of this method as relates to dimensions. However, the control may also predict various features such as surface finish based upon the manufacturing parameters of earlier steps, which may allow the control to be more aggressive for subsequent cutting speeds, or slow down the cutting speeds. As another example the feed rate of a particular component may be varied. One other feature that might be utilized would be if the part 20 is clocked to subsequent machining steps to form the slots 24, the machining parameter may be a sensed backlash. If the backlash is increasing, the control may modify a machining parameter to lower speed. On the other hand, if backlash is decreasing, the speed may be increased.

In a sudden backlash there may be a decrease in machining parameters such as depth of cut, feed velocity, width of cut, rotational speed of the cutting tool and rotational speed of the workpiece, as examples. If no backlash is detected the machining parameters outlined above may be increased to yield a more aggressive material removal rate.

The control 27 or 44 may include one or more computer processors, memory, storage means, network devices, input and/or output devices, and/or interfaces. The control may be operable to execute one or more software programs. The control is operable to communicate with one or more networks established by one or more computing devices. The memory may include UVPROM, EEPROM, FLASH, RAM, ROM, DVD, CD, a hard drive, data in Cloud, or other computer readable medium which may store data and/or the functionality of this description. The control 27/44 may be a desktop computer, laptop computer, smart phone, tablet, or any other computer device. Input devices may include a keyboard, mouse, touchscreen, etc. The output devices may include a monitor, speakers, printers, etc. Control 27/44 may include one or more processors coupled to memory. The connection may be a wired and/or wireless connection. The connection may be established over one or more networks and/or other computing systems. In particular the control 27/44 communicates with the manufacturing machines. The control 27/44 may be programmed with logic to perform any of the functionality disclosed herein.

In one example, the control 27/44 utilizes a neural network(s). The neural network is trained with the training data as explained above.

Machine learning systems other than neural networks can also benefit from this disclosure.

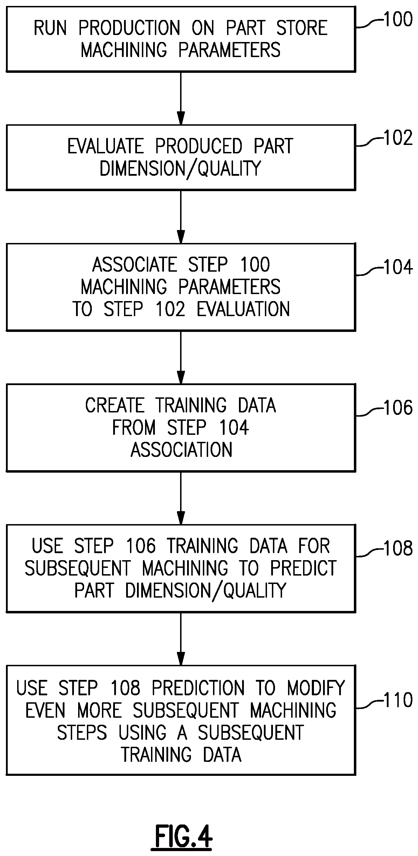

Figure 4 is a flow chart of a disclosed method. The control 27/44 may be operable to perform any of the techniques of the disclosed method. At step 100 initial production is ran on a machining step for a part. Machining parameters, and process data are collected during this machining step and stored. At step 102 the produced part is evaluated, such as to measure dimensions and/or part quality. The measured information is associated with the machining parameters for the particular part. At step 104 the step 100 machining parameters are associated with the step 102 evaluation. At step 106 training data is created from the step 104 association such that a subsequent machining parameter may be utilized to predict the quality of the subsequent produced part. At step 108, the step 106 training data is utilized to modify subsequent machining. The subsequent machining has also been put through steps 100, 102, 104 and 106 such that based upon the modification of the subsequent machining, a prediction can be made of a part dimension and/or quality. At step 110 the prediction for the subsequent machining is utilized to modify subsequent machining, wherein an even more subsequent machining has also been provided with the ability to predict dimension/quality based upon machining parameters.

While the Figures show multiple machines, the several steps may be performed by a single machine.

Although an exemplary embodiment has been disclosed, a worker of ordinary skill in this art would recognize that modifications to the exemplary embodiment may come within the scope of the invention as defined by the appended claims. For that reason, the following claims should be studied to determine the true scope of protection.

## Claims

1. A method of performing machining steps, the method comprising the steps of:
1) performing (100) an initial machining on a plurality of initial parts utilizing at least one machine and storing machining parameters for each of the initial parts;
2) capturing (102) features of the initial parts subsequent to the initial machining;
3) associating (104) the captured features of the initial parts and the stored machining parameters for each of the initial parts, and utilizing (106) the association to form a training database;
4) predicting (108) a part quality for production parts by utilizing a machining parameter of a production machining operation; and
5) modifying (110) machining parameters of a subsequent machining production step based upon the predicted part quality.

2. The method as set forth in claim 1, wherein the captured features include a dimension of at least one feature of the respective initial part, and the modification of the subsequent machining step includes changing a tolerance for a production feature formed by the subsequent production machining step.

3. The method as set forth in claim 2, wherein the subsequent machining step has also been put through steps 1-4 such that the changed tolerance can be utilized to control parameters of a second subsequent machining step.

4. The method as set forth in claim 2 or 3, wherein the tolerance is tightened during the subsequent machining step based upon the predicted part quality from the production machining operation; or
wherein the tolerance is loosened during the subsequent machining step based upon the predicted part quality from the production machining operation.

5. The method as set forth in any preceding claim, wherein the subsequent machining step has a speed modified based upon the predicted part quality; and, optionally, wherein a backlash during the subsequent machining step is monitored to control the speed based upon predicted part quality.

6. The method as set forth in any preceding claim, wherein a feed rate of the initial parts into the subsequent machining step is controlled based upon the prediction of the part quality.

7. The method as set forth in any preceding claim, wherein the production machining operation and the subsequent machining step are performed on different ones of said at least one machine.

8. A system (25, 41) comprising:
at least one machine and a control (27, 44) for the machine, the control comprising processing circuitry and a memory, the memory including training data (34);
the training data (34) prepared by performing an initial machining step on a plurality of initial parts utilizing the at least one machine and storing machining parameters for each of the initial parts, capturing features of the initial parts subsequent to the initial machining step, associating the captured features of the initial parts with the stored machining parameters for each of the initial parts, and utilizing the association to form the training data;
the processing circuity operable to predict a part quality for production parts by utilizing a machining parameter of a production machining operation based upon the training data; and
the processing circuity operable to modify machining parameters of a subsequent production machining step based upon the predicted part quality.

9. The system as set forth in claim 8, wherein the captured features include a dimension of at least one feature, and the modification of the subsequent machining step includes changing a tolerance for a feature formed by the subsequent machining step.

10. The system as set forth in claim 9, wherein the processing circuity is operable to associate training data with the subsequent machining step such that the changed tolerance can be utilized to control parameters of a second subsequent machining step.

11. The system as set forth in claim 9 or 10, wherein the processing circuity is operable to associate training data with the subsequent machining step such that the modified tolerance may be utilized to find a part that might have been out of tolerance to be acceptable.

12. The system as set forth in any one of claims 9 to 11, wherein the processing circuity is operable to tighten the tolerance during the subsequent production machining step based upon the predicted part quality from the production machining operation; or
wherein the processing circuity is operable to loosen the tolerance during the subsequent production machining step based upon the predicted part quality from the production machining operation.

13. The system as set forth in any one of claims 8 to 12, wherein the processing circuity is operable to modify a speed of the subsequent machining step based upon the predicted part quality; and, optionally,
wherein the processing circuity is operable to monitor a backlash during the subsequent machining step to control the speed based upon predicted part quality.

14. The system as set forth in any one of claims 8 to 13, wherein the processing circuity is operable to control a feed rate of a part production into the subsequent production machining step based the prediction of the part quality.

15. The system as set forth in any one of claims 8 to 14, wherein the production machining operation and the subsequent production machining step are performed on different ones of said at least one machine.
